# EUROPEAN PATENT APPLICATION

(11) **EP 1 976 230 A1**
(43) Date of publication of application: **01.10.2008**
(21) Application number: 07006160.1
(22) Date of filing: 26.03.2007
(51) Int. Cl.: H04L 29/08, G09F 23/00, G09F 27/00

(54) **Wireless data transferring system for a lavatory with wireless local area network module**

(71) Applicant: Cerabo International Co. Ltd., Jhongshan 104 Taipei City (TW)
(72) Inventor: Chiu, Chun Jung, Dasi Township Taoyuan County 335 (TW)
(74) Representative: Winkler, Andreas Fritz Ernst

(57) **Abstract**

A wireless data transferring system for a lavatory comprises a host having a decoder to decode a data from a data source, a tuner coupled to the data source to select a desired data, a first WLAN module coupled to the decoder or the data source to transfer data; and at least one sanitary equipment coupled to a receiver, wherein the receiver is coupled to the first WLAN module, and a data output coupled to the receiver to output the data.

## Description

### FIELD OF THE INVENTION:

The present invention relates to a lavatory, particularly to a wireless data transferring system for a lavatory having sanitary that is capable of providing audio or video service via wireless local area network (WLAN).

### BACKGROUND OF THE INVENTION:

Toilet or urinal in the marketplace may have an attachment on the drainpipe which prevents the unpleasant odors released into the sewers from returning. Such attachment operates isolate unpleasant odors only after conclusion of the use of the toilet or urinal device, but does not address the odors produced during the use of the toilet or urinal. However, a ventilation system that operates to remove unpleasant odors during the use of the toilet or urinal has not yet been achieved.

The conventional toilet discharges approximately between 1.6 and 5 gallons of water into the toilet bowl and sewer when it is flushed. Recently, consistent with the recognition of a need for water conservation, toilets have been designed which utilize less volume of water by incorporating water saving devices such as valves which achieve negative buoyancy so that the valve is closed prior to discharge of the entire contents of the toilet tank. However, even with such low water consumption devices, the normal flushing operation will discharge over one gallon of water per flush into the sewer. While this quantity of water may be necessary for flushing some materials such as fecal matter and paper, this quantity of water is in excess of the amount normally required for proper flushing of urine.

Sensors for the purpose of releasing of flushing processes in urinals are predominantly based on the recognition of a user. Devices with the passive infrared sensors are known, which detect the thermal radiation of human beings in front of the urinal and thereby release the flushing. Some devices with active infrared sensors may emit an infrared signal, which is reflected by the human being in front of the urinal. The reflection signal provides indirectly information if a usage has taken place. Finally, devices with radar sensors could emit microwaves which are reflected by the human being in front of the urinal.

Furthermore, solid lavatory cleansing blocks are well known in the art. Such blocks are typically designed to release active materials, including fragrance (or perfume), throughout their life. For example ITB (in the bowl) lavatory cleansing blocks are known which are hung from the rim of the lavatory bowl in a conventional container and which are designed to release fragrance and cleansing components upon dissolution of the block when the toilet is flushed. Additionally ITC (in the cistern) lavatory blocks are known for cleansing toilet systems; such block is placed in the cistern so that when the toilet is flushed cleansing components are released with the flush water into the toilet bowl.

Moreover, currently, toilet, lavatory has above-mentioned development or designs. Therefore, the application and another design of lavatory and lavatory system are provided in the present invention.

### SUMMARY OF THE INVENTION:

The present invention may achieve the wireless data transferring for lavatory that allows the user watching program or advertisement by employing the identical control unit while using the urinal or toilet.

The present invention provides a wireless data transferring system for a lavatory comprising a host having a first WLAN module coupled to the data source to transfer data; and at least one sanitary equipment coupled to a receiver, wherein the receiver is coupled to the first WLAN module, and a data output coupled to the receiver to output the data.

The wireless local area network (WLAN) module includes Bluetooth standard compatible module, Wi-Fi standard compatible module, 802.11x standard compatible module. Data includes audio signal, video signal, digital data and the combination thereof.

Another aspect of the present invention discloses a lavatory system comprising a host having a processor to process data from a data source, a transmitter coupled to the data source to transfer data; and at least one sanitary equipment coupled to a receiver thereon, wherein the receiver is coupled to the transmitter via a wired transmission line, and a data output coupled to the receiver to output the data.

The data output includes display and/or speaker. Each of sanitary equipment includes a display. All of the sanitary equipments may share a set of speaker or each of sanitary equipment has its own speaker. It depends on the necessary.

### BRIEF DESCRIPTION OF THE DRAWING:

For a better understanding of the present invention and to show how it may be implemented, reference will now be made to the following drawings:
Fig. 1 is showing a lavatory with wired/wireless data transferring according to one embodiment of the present invention.
Fig. 2 is a urinal or toilet according to the present invention.
Fig. 3 is a block diagram showing the lavatory with wireless data transferring according to one embodiment of the present invention.
Fig. 4 is a block diagram showing the lavatory with wired data transferring according to another embodiment of the present invention.

### DESCRIPTION OF THE PREFERRED EMBODIMENT:

The present invention is described with the preferred embodiments and accompanying drawings. It should be appreciated that all the embodiments are merely used for illustration. Hence, the present invention can also be applied to various embodiments other than the preferred embodiments.

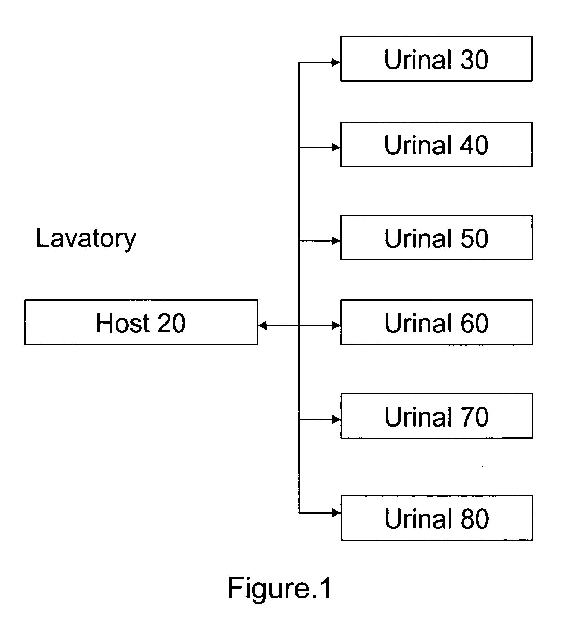

In Fig. 1, the present invention discloses a wireless data transferring system for a lavatory which comprises a host terminal and at least one client terminal. In one case, it may process a wireless local area network (WLAN) protocol or a wired communication. It should be noted that the host terminal 20 transmits data for client terminals via wireless local area network (WLAN) module or a wired communication line. For instance, the client terminal may be sanitary equipment with a data receiver, for example urinal 30, 40, 50, 60, 70, 80 or more. Accordingly, the wireless data transferring system for lavatory of the present invention provides sanitary equipment (for example urinal or toilet) having a display for displaying audio, video signal via the wireless local area network (WLAN) module.

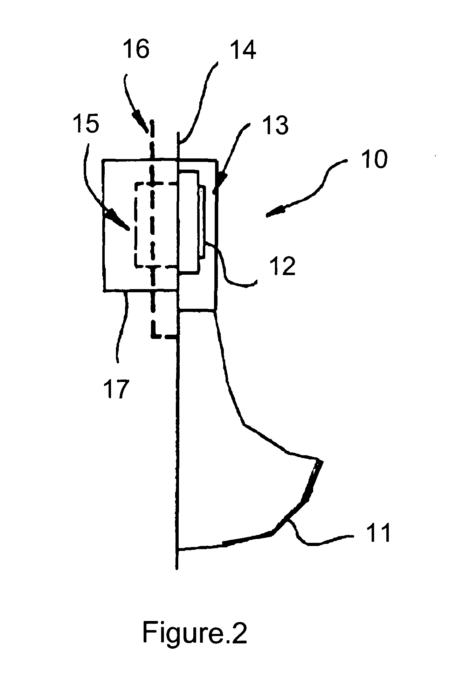

Referring to Fig.2, it shows a "flush-mounted" urinal or toilet 10 according to the present invention for an example. The urinal is used for illustrating and not used for limiting the scope of the present invention. In this case, a water line 16, with or without a water tank 17, or a preferably and alternatively provided flushing box 17, is mounted in the wall 14 or "underground," along with a controller 15. The cover plate 13 here encompasses in particular the WLAN module or receiver 12 for receiving and displaying audio or video signals from the host terminal.

In this embodiment, a complete lavatory or urinal 10 is provided with a sanitary body or urinal basin 11. The urinal basin 11 is supplied with flushing water through the water line 16. A stop valve and filter are situated in the water line 16. Here, the stop valve makes it possible to block the water line 16, e.g., for assembling or dismantling the urinal 10. The water filter cleans the water so that a downstream bistable solenoid valve does not become adversely affected or jammed by any dirt particles. Among other things, the bistable solenoid valve, filter, sensor, etc. are integrated into the controller 15.

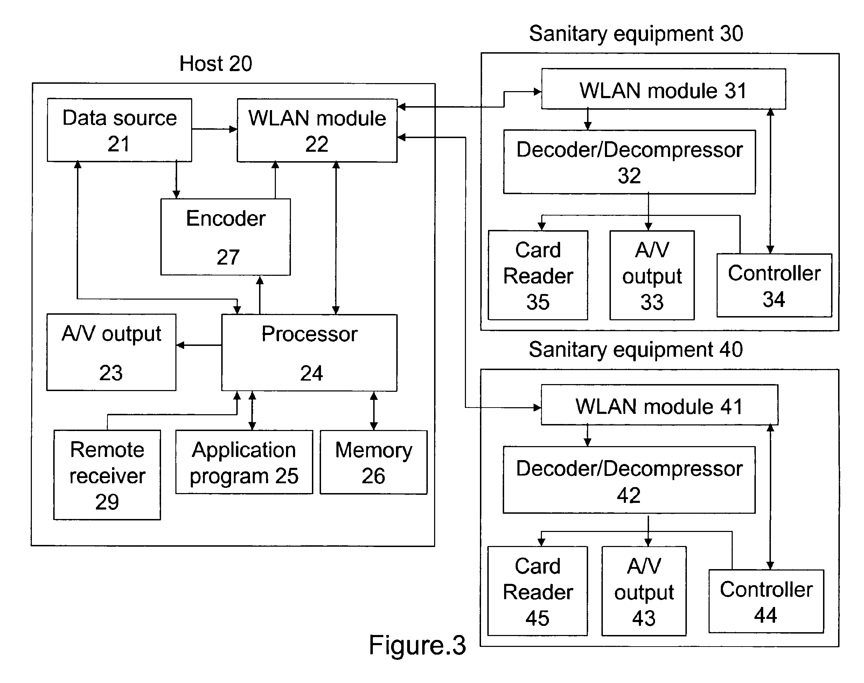

Referring to Fig.3, it illustrates the functional diagram of the lavatory with wireless data transferring for receiving audio, video or electronic bulletin board capability via WLAN module. The diagram is used for illustrating and not used for limiting the scope of the present invention. In general, the host 20 produces data from a data source 21. The data include audio, video or text data. The data source 21 includes DVD player, VCD player, MPEG player, WAN player coupled to WLAN module 22 for transferring data.

For example, data source 21 is modulated and received a signal through an antenna (or cable). The audio/video data might be compressed before transmitting. In one embodiment, audio/video data from the data source 21 is encoded by an encoder 27. The signals conversion and compression processing technologies are well known to the ordinary people skilled in related art; therefore the detailed descriptions are omitted to prevent from obscuring the present invention. The processor 24 is coupled to WLAN module 22 for transferring data.

As an applied example of the present invention, it can play the role of an electronic bulletin board which may be utilized as an advertising medium. For example, an operator of the electronic bulletin board collects advertisement posting charges, and stores data of advertisement, which are consigned to post by an advertiser. Accordingly, a reader of the bulletin board can read an advertisement. Thereby, the bulletin board provided by the electronic bulletin board can function as the advertisement medium. The system is therefore can be used in the transportation station to display the information. Similarly, other data can also be distributed through the present invention.

As known, the host 20 of the present invention usually includes a final actuators, i.e. display or speaker for A/V (Audio, Video) output 23, for example including CRT, LCD (liquid crystal device panel), PDP, RPTV, PDP. The display may display audio, video data or data of advertisement. A remote receiver or touch panel 29 is coupled to a processor 24 to be used to receive the instruction signal from a remote controller or instruction of the user. Typically, the remote receiver 29 receives the instruction of the remote controller and transfers the instruction to the processor 24 for processing the signal.

The host 20 includes converter (A/D, D/A) for converting the data from digital to analog. The present invention includes a processor 24, a build-in display for A/V (Audio, Video) output 23 and memory 26. A/V (Audio, Video) output 23 is coupled to a processor 24. The memory 26 can be a ROM program memory, a RAM memory or a nonvolatile FLASH memory. All of the units mentioned above are coupled to the processor 24, respectively. In one embodiment, the MPEG (MP3, MP4) or WAN file can be stored in the memory or hard disc 26, the stored files can be encoded by the encoder 27 and sent to the WLAN module 22. The encoder 27 is coupled to the processor 24 and WLAN module 22.

WLAN module 22 is coupled to the processor 24 to allow the host terminal 20 transmitting the audio, video or internet type signals to WLAN modules 31, 41. In one case, the system further includes a receiver, wireless local area network (WLAN) module 31, 41 coupled to controller 34, 44, respectively. An antenna is provided to couple to the wireless local area network (WLAN) module 31, 41 for receiving signal from WLAN (wireless local area network) 22, as shown in figure 3.

Further, the present invention provides a transmission audio/video data from WLAN module 22 for transmitting the data to receiver including WLAN module 31, 41 embedded in or configured on, around sanitary equipment 30, 40, respectively. The user may employ the lavatory with wireless data transferring to transmit the vocal, video or both signal through the WLAN module 22, 31, 41. The client terminal, sanitary equipment 30, 40, may include a urinal or toilet 10 as set in figure 2. As the same, the sanitary equipment 30, 40 of the present invention may usually include or couple to a final actuators, i.e. display or speaker for A/V (Audio, Video) output 33, 43, for example including CRT, LCD (liquid crystal device panel), PDP, RPTV, PDP. Typically, the data from the data source 21 is decoded or decompressed by a decoder/decompressor 32, 42, and then displaying the A/V (Audio, Video) output 33, 43. A/V (Audio, Video) output 33, 43 are coupled to a controller 34, 44, respectively. The data output includes display and/or speaker. Each of sanitary equipment 30, 40 includes a display. All of the sanitary equipments may share a set of speaker or each of sanitary equipment has its own speaker. It depends on the necessary.

In one embodiment, some of the above-mentioned electronic elements, for example receiver 31, 41 are coupled to the sanitary equipment 30, 40 thereon. Moreover, wireless data transferring system for a lavatory of the present invention further comprises card reader 35, 45 coupled to the controller 34, 44, respectively.

One aspect of the present invention, the wireless local area network (WLAN) module could be compatible to the local area network protocol or standard such as Bluetooth standard, Wi-Fi standard or 802.11x standard compatible module. Typically, the WLAN module may include transceiver, base-band unit, digital signal processing etc.. The WLAN module is well known in the art, the detailed description is omitted.

As known, the host 20 may include application program 25, for instance application software. The application program 25 allows the host 20 to perform some application or transferring data. The software program is not the feature of the present invention, the description is omitted.

Therefore, the present invention may provide sanitary equipment, for example urinal or toilet, for displaying audio, video signal via the wireless local area network (WLAN) module.

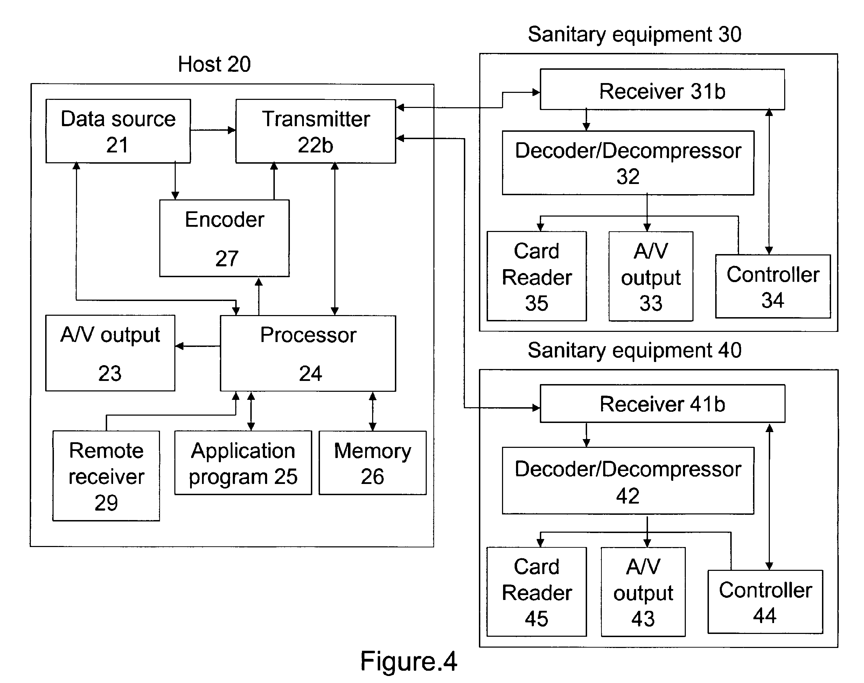

Referring to Fig.4, it illustrates the functional diagram of the wireless data transferring system for a lavatory of the present invention to implement audio, video or electronic bulletin board capability via wired communication. The embodiment is implanted for wired application. The former is for wireless application. The diagram is used for illustrating and not used for limiting the scope of the present invention. Most of the elements are similar to the wireless embodiment except the transmission means. In the embodiment, the data from the data source 21 is transmitted by a transmitter 22b to a receiver 31b, 41b via a wired communication line. The transmitter 22b, receiver 31b, 41b are introduced to replace the WLAN module of the first embodiment.

As is understood by a person skilled in the art, the foregoing preferred embodiments of the present invention are illustrated of the present invention rather than limiting of the present invention. It is intended to cover various modifications and similar arrangements included within the spirit and scope of the appended claims, the scope of which should be accorded the broadest interpretation so as to encompass all such modifications and similar structure. While the preferred embodiment of the invention has been illustrated and described, it will be appreciated that various changes can be made therein without departing from the spirit and scope of the invention.

## Claims

1. A wireless data transferring system for a lavatory, which characterizes in that a host having a processor and a data source, a first WLAN module coupled to said processor or said data source to transfer data; and at least one sanitary equipment coupled to a receiver thereon, wherein said receiver is coupled to said first WLAN module, and a data output coupled to said receiver to output said data.

2. The system as set forth in claim 1, wherein said receiver comprises a second WLAN module.

3. The system as set forth in claim 1, wherein said sanitary equipment comprises a urinal or toilet.

4. The system as set forth in claim 2, wherein said first and second wireless local area network (WLAN) module includes Bluetooth standard compatible module, Wi-Fi standard compatible module, 802.11x standard compatible module.

5. The system as set forth in claim 1, wherein said data source includes local data source including DVD player, VCD player, MPEG player, WAN player.

6. The system as set forth in claim 1, wherein said host further comprises a memory coupled to said processor.

7. The system as set forth in claim 1, wherein said data output comprises a display.

8. The system as set forth in claim 1, wherein said data output comprises a speaker.

9. The system as set forth in claim 1, further comprising a controller coupled to said receiver.

10. The system as set forth in claim 9, further comprising a card reader coupled to said controller.

11. A data transferring system for a lavatory, which characterizes in that a host having a processor and a data source, a transmitter coupled to said processor or said data source to transfer data; and at least one sanitary equipment coupled to a receiver thereon, wherein said receiver is coupled to said transmitter via a wired transmission line, and a data output coupled to said receiver to output said data.

12. The system as set forth in claim 11, wherein said sanitary equipment comprises a urinal or toilet.

13. The system as set forth in claim 11, wherein said data source includes local data source including DVD player, VCD player, MPEG player, WAN player.

14. The system as set forth in claim 11, wherein said host further comprises a memory coupled said processor.

15. The system as set forth in claim 11, wherein said data output comprises a display.

16. The system as set forth in claim 11, wherein said data output comprises a speaker.

17. The system as set forth in claim 11, further comprising a controller coupled to said receiver.

18. The system as set forth in claim 17, further comprising a card reader coupled to said controller.
